Europäisches Patentamt

European Patent Office

Office européen des brevets

(11) Publication number: **0 104 869**
**A2**

# (12) EUROPEAN PATENT APPLICATION

(21) Application number: **83305522.1**

(22) Date of filing: **20.09.83**

(51) Int. Cl.³: **G 01 B 11/28**

(30) Priority: **20.09.82 JP 162164/82**

(43) Date of publication of application:
**04.04.84 Bulletin 84/14**

(84) Designated Contracting States:
**BE DE FR GB IT NL**

(71) Applicant: **Seiren Denshi Kabushiki Kaisha**
**10-1 Keya-1-chome**
**Fukui-shi Fukui-ken(JP)**

(72) Inventor: **Ryoichi, Shimada**
**28-16 Onocho**
**Sabae-shi Fukui-ken(JP)**

(74) Representative: **Rees, David Christopher et al,**
**Kilburn & Strode 30 John Street**
**London WC1N 2DD(GB)**

(54) **Apparatus for measuring a design area on a printing mesh cylinder.**

(57) Apparatus for measuring a design area (1a) on a printing mesh cylinder (1) comprising a light projector (2) outside the cylinder (1), a receiver (3) inside the cylinder (1) and an integrator. The cylinder (1) is rotated and the projector (2) and receiver (3) are caused to traverse the cylinder in synchronism with its rotation, thus scanning the entire surface of the cylinder (1). The receiver (3) sends electrical signals corresponding to light transmitted by the design (1a) on the cylinder (1) to the integrator which sums the signals to calculate the area of the design (1a).

FIG. IA

FIG. IB

## APPARATUS FOR MEASURING A DESIGN
## AREA ON A PRINTING MESH CYLINDER

The present invention is concerned with rotary screen printing, which is one of the methods of printing textiles and particularly relates to apparatus for measuring the size of a design or the design area on a mesh cylinder used as a printing pattern.

Manufacturing methods of mesh cylinders or printing patterns are of two types, i.e., the lacquer process and the galvano process.

The lacquer process consists of applying a photosensitive resinous solution onto the entire surface of a metallic mesh cylinder, winding a film painted with a design around the mesh cylinder, exposing the mesh cylinder and removing the resinous coating on the design portions. In the mesh cylinder manufactured by this process the metal is exposed in the design portions and the non-design portions are electrically insulated by the resinous coating. As a result, the difference in electric resistance between the design portions and the non-design portions are utilised in the measurement of the design area on a mesh cylinder of this type. In other words, the area of the design portions is measured by rotating the mesh cylinder in a circumferential direction, holding a small electric brush in contact with the cylinder surface, moving the brush in the axial direction of the cylinder in synchronism with the circumferential rotation of the cylinder to scan the whole surface of the cylinder and integrating the surface portions which are low in electric resistance.

However, due to various difficulties that the irregularities in the surface of the mesh cylinder are large, that the electric brush cannot be intensely contacted with the mesh cylinder due to the low mechanical strength of the latter, that the contact area of the electric brush must be reduced considerably so as to improve the area measuring accuracy and so on, it is impossible to expect the theoretical measurement accuracy and this measuring method cannot be put in practical use. In particular, the design area is an important factor for determining the amount of coloured paste to be produced and the development of a highly accurate measuring apparatus has been sought.

On the other hand, the galvano process is a method which uses no resinous coating and a cylinder produced by this process is such that both the design and non-design portions are composed of metal. As a result, the above mentioned method of utilising the difference in electric resistance cannot be used in the measurement of the design area on a cylinder of this type and there has not been any other suitable method proposed.

The present invention has been made in view of these circumstances and it is an object of this invention to provide a printing mesh cylinder design area measuring apparatus capable of accurately measuring in a short period of time the design area on a mesh cylinder manufactured by either the lacquer process or the galvano process.

According to the invention, the apparatus is characterised in that it comprises at least one light projector and at least one receiver mounted opposite each other on the outer and inner sides of the printing mesh cylinder; rotational drive means for driving the printing mesh cylinder at a predetermined rotational speed; traverse drive means for causing relative movement between the cylinder and the light projector and receiver in the axial direction of the cylinder in synchronism with the rotation of the cylinder; and integrating means for integrating an output from the receiver corresponding to light received from the light projector to measure a design area.

Thus, the apparatus of this invention utilises the method of dividing a design into small areas and integrating the number of these small areas to measure the area of the design and the apparatus includes at least one pair of light projector and receiver which are arranged in opposite positions on the outer and inner sides of a printing mesh cylidner (hereinafter simply referred to as a cylinder). The light projector illuminates the cylinder and the light receiver converts the received light to an electric output. In order to scan the whole surface of the cylinder, the apparatus further includes a rotational drive unit for operating the cylinder at a constant rotational speed and a traverse drive unit for moving the light projector and the light receiver in the axial direction of the cylinder in synchronism with the rotation of the cylinder. By means of these drive units, the cylinder is rotated and the light projector and the light receiver are moved in the axial direction of the cylinder. In response to the rotation and the axial movement, the whole surface of the cylinder can be scanned by the light projector and the light receiver.

The apparatus further includes an integrator for integrating the output of the light receiver to measure the area of a design. The electric output of the light receiver exceeding a given threshold value can be discriminated as indicative of the design and the output pulses are counted. Since the whole surface of the cylinder can be scanned by the light projector and the light receiver, the integrated value of the integrator corresponds to the total design area of the cylinder.

From the foregoing description, it will be seen that the apparatus according to the invention utilises a light beam with the result that the design area on a cylinder made by the lacquer or galvano process can be measured accurately and the measurement error can in fact be kept within the range of $\pm$ 1 to 2%. Also, since the measurement is effected in a non-contact manner, the rotation of the cylinder and the traverse movement of the light projector and the light receiver can be speeded up and the measuring time can be reduced. Still further, the danger of the cylinder being damaged is reduced and also the danger of the measurement being affected by a distortion in the cylinder (the sectional shape is not a perfect round shape and it tends to have an oval shape) is reduced.

The light projector may comprise a laser emitter or an incandescent lamp, a lens and pinhole plates.

Preferably, the rotational drive means comprises a plurality of rollers mounted in contact with the outer surface of the cylinder and adapted to be rotated by another driving means. Preferably, the traverse drive means comprises a drive, a threaded drive shaft adapted to be rotated by the drive, and a non-rotating nut threadedly engaged with the drive shaft the light projector and receiver being moved in response to a movement of the nut. Preferably, the integrating means comprises an amplifier for amplifying the output from the light receiver, a wave-form reshaping circuit for reshaping the output from the amplifier, a shift register for receiving the output from the wave-form reshaping circuit, and a counter for counting the output from the shift register.

The invention may be carried into practice in various ways and some embodiments will now be described by way of example with reference to the accompanying drawings,-in which:-

Figures 1A and 1B are diagrams showing the relation between a light projector, a light receiver and a cylinder in an apparatus according to one embodiment of the invention;

Figure 2 is an output waveform diagram of the light receiver of Figure 1;

Figure 3 is a diagram showing the construction of the light projector and receiver;

Figure 4 is a diagram showing another embodiment of the invention including a plurality of pairs of the light projector and receiver of Figure 3 and a traverse drive unit; and

Figure 5 is a block diagram showing the overall construction of the apparatus according to still another embodiment of the invention.

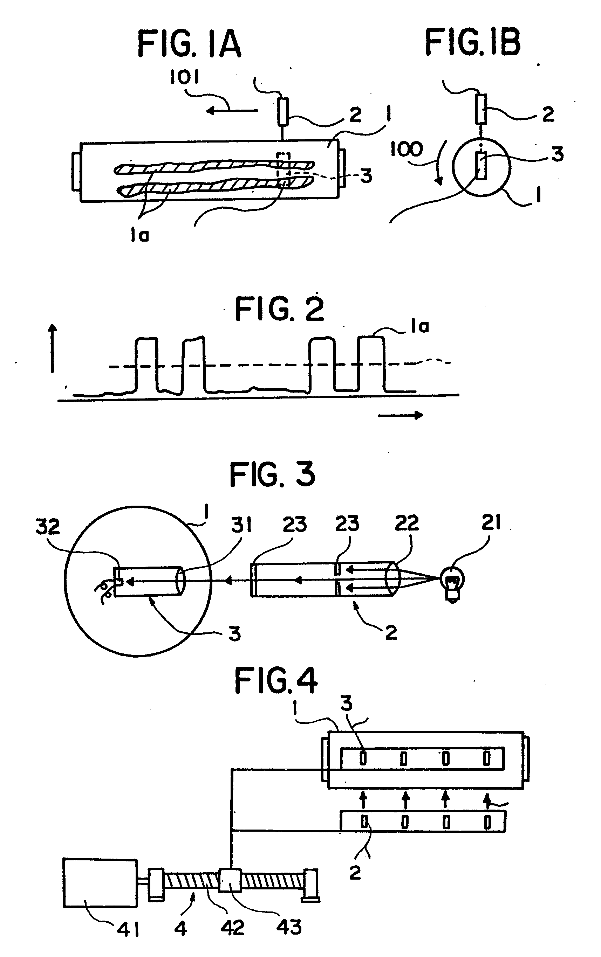

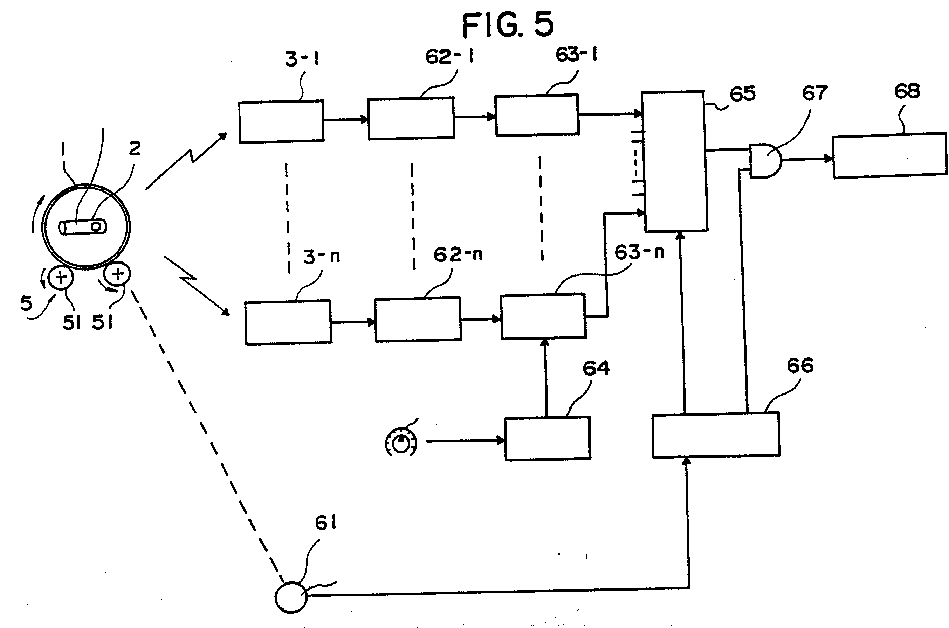

Referring now to Figures 1A and 1B, an apparatus according to this embodiment of the invention includes a light projector 2 and a receiver 3 which are arranged in opposite positions on the outer and inner sides of a cylinder 1. The light projector 2 illuminates the cylinder 1 and the light receiver 3 converts the received light to an electrical output. For the purpose of scanning the whole surface of the cylinder 1, the apparatus further includes a rotational drive unit (at numeral 5 in Figure 5) for operating the cylinder 1 at a constant rotational speed and a traverse drive unit (at numeral 4 in Figure 4) for moving the light projector 2 and the light receiver 3 in the axial direction of the cylinder 1 in synchronism with the rotation thereof. By virtue of these units, the cylinder 1 is rotated in a circumferential direction 100 and the light projector 2 and the light receiver 3 are moved in an axial direction 101. Thus, the whole surface of the cylinder 1 is scanned by the light projector 2 and the light receiver 3 in response to these rotational and traverse movements. The electric output from the light receiver 3 has a waveform as shown in Figure 2 so that those portions exceeding a predetermined threshold value SH are discriminated as indicative of a design 1a and these pulses are counted.

Next, the construction of the light projector 2 and the light receiver 3 will be described. As shown in Figure 3, the light projector 2 includes an incandescent lamp 21 as a light source and the light emitted from the lamp 21 is converted to a parallel light by a lens 22, converted to a light beam through pinhole plates 23 and projected onto the cylinder 1. In the light receiver 3, the light passed through the design portion is collected by a lens 31 and projected onto a photoelectric element 32.

In accordance with this embodiment, a reference small area is selected $1mm^2$ and the light beam is selected $1mm\emptyset$. As a result, irrespective of whether the cylinder 1 is made by the lacquer process or the galvano process, the design portion transmits the light and the non-design portion scatters or intercepts the light thereby making it possible to distinguish clearly between the design portion and the non-design portion in accordance with the electric output from the photoelectric element 32 of the light receiver.

It is to be noted that if the cylinder is one made by the galvano process, the non-design portion is the metal and thus the light is completely intercepted. On the other hand, if the cylinder is one made by the lacquer process, the non-design portion is the resinous coating which does not readily transmit the light so that the light is scattered and the incident light to the light receiver is very weak. However, in order to increase the attenuation of the light transmitted through the resinous coating of the cylinder, that is, in order to increase the ratio between the intensity of the light transmitted through the design portion and the intensity of the light transmitted through the non-design portion (the resinous coating) thereby to make the measurement easier, it is essential that the light beam used is a parallel light. Therefore, the light projector may comprise a laser beam projector.

Alternatively, (Figure 4), a plurality of light projectors 2 and a plurality of light receivers 3 may be used. The light projectors and receivers 2 and 3 are respectively arranged at equal intervals along the axial direction of the cylinder 1. These light projectors and receivers are constructed so that they are moved in the axial direction by a traverse drive unit 4. The traverse drive unit 4 is constructed so that driving means 41 rotates a feed screw 42 and a square screw 42 meshed with the feed screw 42 is moved axially over the feed screw 42 thereby moving the light projector and receiver 2 and 3 in the axial direction.

By arranging a plurality of pairs of light projector and receiver 2 and 3, and scanning the surface of the cylinder 1 which is divided into a plurality of sections, it is possible to reduce the measuring time considerably and enhance the usefulness of the device.

An apparatus according to another embodiment of the invention on the whole will now be described. As shown in Figure 5, a plurality of light projectors 2 - 1 to 2 - n are mounted inside a cylinder 1 and a plurality of light receivers 3 - 1 to 3 - n are mounted on the outside of the cylinder 1 in opposition to the light projectors 2 - 1 to 2 - n, respectively. The relationship between the light projectors and receivers is opposite to that in the embodiment of Figure 4. Also mounted on the outside of the cylinder 1 is a rotational drive unit 5 for rotating the cylinder 1. The rotational drive unit 5 drives rollers 51 mounted in contact with the outer surface of the cylinder 1 and the cylinder 1 is rotated. The driving is controlled by the pulses from a pulse generator 61. Alternatively, it is possible to construct the system so that the pulse generator 61 instead is driven by the rotation of the rolls 51. Although not shown, the cylinder 1 is also equipped with the traverse drive unit of Figure 4 and this drive unit is also controlled by the pulses from the pulse generator 61. In this case, it is also possible to arrange for the rotation of the rollers 51 to be synchronised with the driving of the traverse drive unit 4. By virtue of this construction, the rotation of the cylinder 1 is synchronised with the relative axial movement of the light projectors and receivers 2 and 3 with a predetermined relation. In other words, the timing is such that the light projectors and receivers 2 and 3 are each moved by an amount corresponding to the beam width of the light projectors 2 for every rotation of the cylinder 1.

A series of amplifiers 62 - 1 to 62 - n and waveform reshaping circuits 63 - 1 to 63 - n are connected to the light receivers 3 - 1 to 3 - n, respectively. As a result, the output of each light receiver is amplified by its associated amplifier and then reshaped to a pulse-like waveform by the associated waveform reshaping circuit. The required threshold value for waveform reshaping purposes can be preset arbitrarily by adjusting a setting knob VR for a threshold value adjusting circuit 64. In this embodiment, the output wave form from each of the amplifiers 62 - 1 to 62 - n is similar to the waveform shown in Figure 2. The output from each of the waveform reshaping circuits 63 - 1 to 63 - n is supplied to a shift register 65. The output from the pulse generator 61 is supplied to a gate control circuit 66 whose output is supplied as clock pulses to the shift register 65 and a gate circuit 67, respectively. Thus, in accordance with the timing of clock pulses from the gate control circuit 66, the shift register 65 shifts and supplies the input data or the outputs from the waveform reshaping circuits 63 - 1 to 63 - n to the gate circuit 67. In accordance with the timing of the clock pulses, the gate circuit 67 supplies the input signal to an integrating counter 68. The integrating counter 68 integrates the input from the gate circuit 67. In this case, since the cylinder 1 is rotated and the light projectors and receivers 2 - 1 to 2 - n and 3 - 1 to 3 - n are moved in the axial direction of the cylinder 1, the light projectors and receivers scan the whole surface of the cylinder 1 and the resulting integrated value of the integrating counter 68 corresponds to the total design area of the cylinder 1.

The light projectors and receivers, the rotational drive unit, the traverse drive unit and the integrator are not limited to those used in the above-described embodiments and they may be modified suitably to meet their desired purposes.

11.

## CLAIMS

1.  Apparatus for measuring a design area (1a) on a printing mesh cylinder (1) characterised in that it comprises at least one light projector (2) and at least one receiver (3) mounted opposite each other on the outer and inner sides of the printing mesh cylinder (1); rotational drive means (5) for driving the printing mesh cylinder (1) at a predetermined rotational speed; traverse drive means (4) for causing relative movement between the cylinder (1) and the light projector and receiver in the axial direction of the cylinder (1) in synchronism with the rotation of the cylinder (1); and integrating means for integrating an output from the receiver (3) corresponding to light received from the light projector (2) to measure a design area (1a).

2.  Apparatus as claimed in Claim 1, characterised in that the light projector (2) comprises laser beam emitting means for generating a beam of light.

3.  Apparatus as claimed in Claim 1, characterised in that the light projector (2) comprises an incandescent lamp (21), a lens (22) and pinhole plates (23).

4.  Apparatus as claimed in any of Claims 1 to 3 characterised in that the rotational drive means (5) comprises a plurality of rollers (51) mounted in contact with the outer surface of the cylinder (1) and adapted to be rotated by another driving means.

5.   Apparatus as claimed in any preceding Claim
characterised in that the traverse drive means (4)
comprises a drive (41), a threaded drive shaft (42)
adapted to be rotated by the drive (41), and a non-
rotating nut (43) theadedly engaged with the drive
shaft (42), the light projector (2) and receiver (3)
being moved in response to a movement of the nut (43).

6.   Apparatus as claimed in any preceding Claim
characterised in that the integrating means comprises
an amplifier (62) for amplifying the output from the
light receiver (3), a waveform reshaping circuit (63)
for reshaping the output from the amplifier (62), a
shift register (65) for receiving the output from the
waveform reshaping circuit (63), and a counter (68)
for counting the output from the shift register (65).

0104869

FIG. IA

FIG.IB

FIG. 2

FIG. 3

FIG.4

FIG. 5